# EUROPÄISCHE PATENTSCHRIFT

(11) **EP 2 872 102 B1**
(45) Veröffentlichungstag und Bekanntmachung des Hinweises auf die Patenterteilung: **20.04.2016**
(21) Anmeldenummer: 13724224.4
(22) Anmeldetag: 15.05.2013
(51) Int. Cl.: A61J 3/07

(54) **KAPSELWÄGEVORRICHTUNG, KAPSELFÜLLMASCHINE UND VERFAHREN ZUM WIEGEN EINER KAPSEL**
CAPSULE-WEIGHING DEVICE, CAPSULE-FILLING MACHINE, AND METHOD FOR WEIGHING A CAPSULE
DISPOSITIF DE PESÉE DE CAPSULES, MACHINE DE REMPLISSAGE DE CAPSULES ET PROCÉDÉ POUR LA PESÉE D'UNE CAPSULE

(30) Priorität: 10.07.2012 DE 102012212033
(43) Veröffentlichungstag der Anmeldung: 20.05.2015
(73) Patentinhaber: Robert Bosch GmbH, 70442 Stuttgart (DE)
(72) Erfinder: RUNFT, Werner, 71364 Winnenden (DE); FRANCK, Thomas, 73547 Lorch-Weitmars (DE); SCHLIPF, Jens, 71691 Freiberg A.N. (DE); BOEHRINGER, Walter, 73630 Remshalden (DE); VOGT, Martin, 73614 Schorndorf (DE)
(86) Internationale Anmeldenummer: PCT/EP2013/059983
(87) Internationale Veröffentlichungsnummer: WO 2014/009040

(56) Entgegenhaltungen:
- EP-A1- 1 982 687
- DE-A1-102009 028 372
- US-A- 4 223 751

## Beschreibung

### Stand der Technik

Die vorliegende Erfindung betrifft eine Kapselwägevorrichtung und eine Kapselfüllmaschine, umfassend die Kapselwägevorrichtung. Des Weiteren ist ein Verfahren zum Wiegen einer Kapsel gezeigt. Die Kapsel wird insbesondere mit medizinischen Präparaten befüllt.

Bei dem Befüllen von Kapseln, insbesondere mit medizinischen Präparaten, gibt es verschiedenste Situationen, in denen die leere Kapsel, die teilweise befüllte Kapsel oder die vollständig befüllte Kapsel gewogen werden muss. Üblicherweise werden mehrere der Kapseln bzw. der Kapselunterteile in einen Kapselhalter eingesetzt. Der Kapselhalter transportiert die Kapselunterteile zu den einzelnen Stationen zum Befüllen und Verschließen der Kapseln. Die DE 11 2005 002 354 T5 zeigt eine Sensorik zum Wiegen, die vollständig in den Kapselhalter integriert ist. Der Kapselhalter ist dabei nicht örtlich an einer Stelle, sondern bewegt sich durch die ganze Abfüllmaschine. Dieses vorbekannte System ist sehr aufwändig, da zusätzliche Maßnahmen zur Stromversorgung und Datenübertragung zum Kapselhalter hin notwendig sind. In EP 1 982 686 werden die Kapselunterteile innerhalb des Kapselhalters gewogen. Dabei werden die Kapselunterteile allerdings mittels eines Stößels nach oben verschoben. Dies führt zu nicht unerheblichen Messungenauigkeiten. Des Weiteren ist das Handling mit der Kapsel kritisch, da man davon ausgehen muss, dass unrunde oder klebrige Kapseln nicht von selbst wieder in die Kapselaufnahme zurückgleiten.

Aus der DE 10 2009 028 372 A1 ist bereits eine Wägestation zum wiegen eines Produkts, insbesondere eines Kapselunterteils, bekannt. Sobald eine Transportvorrichtung eine Aufnahme inklusive Formateinsatz und Kapselunterteil in einen Wägeraum verfahren hat, drückt ein Niederdrücker die Aufnahme in vertikaler Richtung nach unten. Dadurch werden der Formateinsatz und das Kapselunterteil auf einem Wägetisch freigestellt.

Aus der EP 1982687 A1 sind ein Verfahren und eine Vorrichtung zum Befüllen von Kapseln mit einem Produkt bekannt. Zur Ermittlung des Gewichts des Produkts in einer Kapsel ist eine Elektrode Teil einer Aufnahme der Kapsel, wobei ein entsprechendes elektrisches Feld zur Gewichtszensierung ausgewertet wird.

### Offenbarung der Erfindung

Mit der erfindungsgemäßen Kapselwägevorrichtung gemäß Anspruch 1, der Kapselfüllmaschine gemäß Anspruch 9 und dem Verfahren gemäß Anspruch 10 ist es möglich, dass jedes in den Kapselhalter eingesetzte Kapselunterteil einzeln gewogen wird, ohne dabei das Kapselunterteil bezüglich des Kapselhalters zu bewegen. Darüber hinaus wird erfindungsgemäß die Wägeeinheit von der Transporteinheit und dem Kapselhalter getrennt, so dass der Aufbau einfach und wartungsarm ist. Es handelt sich um eine stationäre Wägeeinheit bzw. um eine Wägeeinheit, die unabhängig vom Kapselhalter bewegbar und positionierbar ist. So ist im Idealfall nur eine Wägeeinheit für eine gesamte Kapselfüllmaschine notwendig. Diese eine Wägeeinheit kann an verschiedensten Stellen der Kapselfüllmaschine verwendet werden. Erfindungsgemäß bleibt das Kapselunterteil sicher und bewegungslos im Kapselhalter. Eine Entnahme und Rückgabe in den Kapselhalter ist nicht erforderlich, so dass eine potentielle Fehlerquelle entfällt. Von jedem gefüllten Kapselunterteil kann das Nettogewicht einzeln bestimmt werden. Die erfindungsgemäße Anordnung lässt es zu, dass sowohl jedes leere Kapselunterteil als auch jedes Kapselunterteil nach einer teilweisen oder vollständigen Befüllung einzeln gewogen werden kann. Das in die Kapsel gefüllt Medium wird nicht vor dem Befüllen vermessen. Erfindungsgemäß erfolgt ein Wiegen des Mediums nach dem Abfüllen, also im Kapselunterteil. All diese Vorteile werden dadurch erreicht, dass zum einen die Wägeeinheit vom Kapselhalter getrennt wird und zum anderen die Kapselunterteile derart im Kapselhalter aufgenommen sind, so dass eine Außenwandung der Kapselunterteile entweder teilweise freiliegt oder nur äußerst dünnwandig vom Kapselhalter umschlossen ist. An der Wägeeinrichtung ist pro zu messendem Kapselunterteil zumindest eine Elektrode vorgesehen. Durch die spezielle Ausgestaltung des Kapselhalters kann an jeweils ein Kapselunterteil zumindest eine Elektrode der Wägeeinheit heranfahren und so ein elektrisches Feld zur Ermittlung des Gewichtes erzeugen. Im Detail umfasst die Kapselwägevorrichtung einen Kapselhalter zur Aufnahme zumindest eines Kapselunterteils. Vorzugsweise ist der Kapselhalter zur Aufnahme einer Vielzahl an Kapselunterteilen, insbesondere mehr als drei Kapselunterteilen, ausgebildet. Unabhängig vom Kapselhalter ist eine Wägeeinheit mit zumindest einer ersten Elektrode zum Wiegen der Kapselunterteile am Kapselhalter vorgesehen. Insbesondere ist pro Kapselunterteil eine erste Elektrode vorgesehen. Mittels einer Transportvorrichtung kann der Kapselhalter, unabhängig von der Wägeeinheit, zu verschiedensten Stationen, beispielsweise einer Einsetzstation, einer Füllstation und einer Verschlussstation, bewegt werden. Zur Erzeugung des elektrischen Feldes zum Vermessen des Kapselunterteils bedarf es einer zweiten Elektrode als Gegenstück zur ersten Elektrode. Wie später noch im Detail erläutert, ist diese zweite Elektrode entweder am Kapselhalter oder an der Wägeeinheit ausgebildet. Die Aufnahme im Kapselhalter für die einzelnen Kapselunterteile ist so ausgestaltet, dass die Außenwandung eines jeden Kapselunterteils entweder freiliegt oder nur sehr dünnwandig vom Material des Kapselhalters umschlossen ist. Dadurch ist es möglich, dass an jedes Kapselunterteil eine erste Elektrode sehr nahe heranfährt. Dadurch ist ein exaktes Vermessen möglich. Das Vermessen mittels des elektrischen Feldes erfolgt insbesondere durch Verwendung der beiden Elektroden als Kondensator oder durch das sogenannte Relaxations-Messverfahren. Beide Methoden sind in DE 10 2008 037 986 A1 beschrieben.

Die Unteransprüche zeigen bevorzugte Weiterbildungen der Erfindung.

Insbesondere ist vorgesehen, dass der Kapselhalter für jedes aufzunehmende Kapselunterteil einen eigenen dünnwandigen Köcher umfasst. Insbesondere weist der Köcher am unteren Ende und/oder an seiner Mantelfläche zumindest einen Durchbruch auf. Die Ausbildung dieser Köcher ermöglicht ein sehr exaktes Heranfahren der Wägeeinheit an die Kapselunterteile.

Für eine möglichst exakte Messung ist vorgesehen, dass die Materialstärke des Kapselhalters zwischen Elektrode und Kapselunterteil, also insbesondere die Materialstärke der oben genannten Köcher, maximal 3 mm, vorzugsweise maximal 1,5 mm, besonders vorzugsweise maximal 0,5 mm, beträgt.

Der Kapselhalter ist bevorzugt so ausgestaltet, dass zumindest die Bereiche, die für die Kapselaufnahme verantwortlich sind, aus Materialien gefertigt werden, bei denen eine kapazitive Messung oder Ähnliches gut möglich ist. Das heißt, dass zumindest die mit dem Kapselunterteil in Berührung stehenden Anteile des Kapselhalters elektrisch nicht leiten, vorzugsweise als Kunststoff, ausgebildet sind.

In bevorzugter Weise befindet sich sowohl die erste Elektrode als auch die zweite Elektrode an der Wägeeinheit. Pro zu wiegendem Kapselunterteil ist eine erste Elektrode und eine zweite Elektrode vorgesehen. Die Wägeeinheit wird derart an den Kapselhalter herangefahren, so dass sich jeweils ein Kapselunterteil zwischen einer ersten Elektrode und einer zweiten Elektrode befindet.

In einer alternativen Ausbildung ist vorgesehen, dass die zweite Elektrode im Kapselhalter ausgebildet ist. In diesem Fall muss beim Heranfahren der Wägeeinheit an den Kapselhalter lediglich die erste Elektrode mit dem Köcher oder direkt mit dem Kapselteil in Berührung gebracht werden.

In bevorzugter Ausführung ist vorgesehen, dass durch Ansetzen der Wägeeinheit an dem Kapselhalter ein dichter Raum entsteht. In diesem dichten Raum befindet sich zumindest die Kontaktstelle zwischen der ersten Elektrode und dem Köcher bzw. dem Kapselunterteil. Mittels einer Vakuumpumpe wird in dem dichten Raum ein Unterdruck erzeugt. Dadurch ist ein sehr exaktes Vermessen möglich. Das Vakuum wird angesetzt, damit die Kapsel sicher mit einer definierten Kraft an der Elektrode anliegt. Diese Kraft kann durch das Vakuum erzeugt werden. Alternativ ist jedoch möglich, diese Kraft durch Druckluft von oben, oder in einer anderen Art, z.B. durch eine Feder oder dgl., zu erzeugen.

Die Erfindung umfasst des Weiteren eine Kapselfüllmaschine. Die im Rahmen der erfindungsgemäßen Kapselwägevorrichtung beschriebenen Unteransprüche und vorteilhaften Ausgestaltungen finden entsprechend vorteilhafte Anwendung auf die erfindungsgemäße Kapselfüllmaschine. Die Kapselfüllmaschine umfasst zumindest eine der Kapselwägevorrichtungen. Des Weiteren ist in der Kapselfüllmaschine eine Einsetzstation zum Einsetzen der Kapselunterteile in den Kapselhalter vorgesehen. Mittels des Kapselhalters werden die Kapselunterteile innerhalb der Kapselfüllmaschine transportiert. Eine Füllstation dient zum Befüllen des Kapselunterteils. An einer Verschlussstation erfolgt ein Aufsetzen eines Kapseloberteils auf das Kapselunterteil. Bevorzugt gibt es in der Kapselfüllmaschine mehrere Füllstationen. An den einzelnen Füllstationen werden verschiedene Präparate, insbesondere medizinische Präparate, in das Kapselunterteil eingefüllt. Ein Wiegen des Kapselunterteils kann an verschiedensten Stellen innerhalb der Kapselfüllmaschine notwendig sein. So muss beispielsweise das leere Kapselunterteil vor der ersten Befüllung vermessen werden. Nach einer teilweisen oder vollständigen Befüllung bedarf es ebenfalls eines Wiegens des Kapselunterteils, um zu kontrollieren, ob die gewünschte Menge des einzelnen Präparates im Kapselunterteil ist. Deshalb ist die Wägeeinheit an den einzelnen Stationen und/oder zwischen den Stationen zum Wiegen an den Kapselhalter heranfahrbar. Alternativ kann auch der Kapselhalter an die Wägeeinheit herangefahren werden. Beim Wiegen erfolgt keinerlei Bewegung der Kapselunterteile im Kapselhalter.

Die Wägeeinheit kann eine oder mehrere Stationen vor der Füllstation zur Ermittlung des Tara-Gewichts installiert werden, und/oder eine oder mehrere Stationen später zur Ermittlung des Brutto-Gewichts. Wird die Wägeeinheit direkt unterhalb einer Füllstation verwendet, so kann zuerst das Tara-Gewicht gemessen werden, dann erfolgt die Füllung und anschließend erfolgt das Messen des Brutto-Gewichts, so dass das Netto-Gewicht ermittelt werden kann, oder die Wägeeinheit wird beim Tarieren auf "0" gestellt, so dass nach dem Füllen das Füllgewicht direkt ermittelt werden kann.

Die Erfindung umfasst des Weiteren ein Verfahren zum Wiegen einer Kapsel. Die im Rahmen der Kapselwägevorrichtung und Kapselfüllmaschine beschriebenen Unteransprüche und vorteilhaften Ausgestaltungen finden entsprechend vorteilhafte Anwendung auf das erfindungsgemäße Verfahren. Im Verfahren erfolgt ein Bereitstellen eines Kapselhalters mit zumindest einem eingesetzten Kapselunterteil. Insbesondere werden mehrere Kapselunterteile eingesetzt. Das Kapselunterteil verbleibt beim Befüllen, Transportieren und Verschließen im Kapselhalter.

Im nächsten Schritt erfolgt ein Heranfahren einer Wägeeinheit mit zumindest einer ersten Elektrode an den Kapselhalter und/oder ein Heranfahren des Kapselhalters an die Wägeeinheit mit zumindest einer ersten Elektrode zum Wiegen des zumindest einen Kapselunterteils mit einem elektrischen Feld zwischen der ersten Elektrode und einer zweiten Elektrode.

Dabei verbleibt das Kapselunterteil bewegungslos im Kapselhalter.

Besonders bevorzugt ist der Kapselhalter sowohl für die Kapselwägevorrichtung, die Kapselfüllmaschine und das erfindungsgemäße Verfahren so ausgebildet, dass zwei oder mehr Kapselunterteile darin aufgenommen werden können. Die Wägeeinheit ist dazu ausgebildet, dass gleichzeitig zumindest zwei, insbesondere alle, der Kapselunterteile im Kapselhalter gleichzeitig gewogen werden können.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine erste Schnittansicht einer erfindungsgemäßen Kapselwägevorrichtung gemäß einem ersten Ausführungsbeispiel,
- Figur 2: eine zweite Schnittansicht der erfindungsgemäßen Kapselwägevorrichtung gemäß dem ersten Ausführungsbeispiel,
- Figur 3: eine isometrische Ansicht der erfindungsgemäßen Kapselwägevorrichtung gemäß dem ersten Ausführungsbeispiel,
- Figur 4: ein Detail der erfindungsgemäßen Kapselwägevorrichtung gemäß einem zweiten Ausführungsbeispiel,
- Figur 5: eine erste Schnittansicht der erfindungsgemäßen Kapselwägevorrichtung gemäß einem dritten Ausführungsbeispiel,
- Figur 6: eine zweite Schnittansicht der erfindungsgemäßen Kapselwägevorrichtung gemäß dem dritten Ausführungsbeispiel,
- Figur 7: eine erfindungsgemäße Kapselfüllmaschine gemäß einem vierten Ausführungsbeispiel,
- Figur 8: mehrere Ansichten eines Kapselhalters für die erfindungsgemäße Kapselwägevorrichtung gemäß einem fünften Ausführungsbeispiel, und
- Figur 9: mehrere Ansichten eines Kapselhalters für die erfindungsgemäße Kapselwägevorrichtung gemäß einem sechsten Ausführungsbeispiel.

### Ausführungsformen der Erfindung

Gleiche bzw. funktional gleiche Bauteile sind in allen Ausführungsbeispielen mit denselben Bezugszeichen versehen.

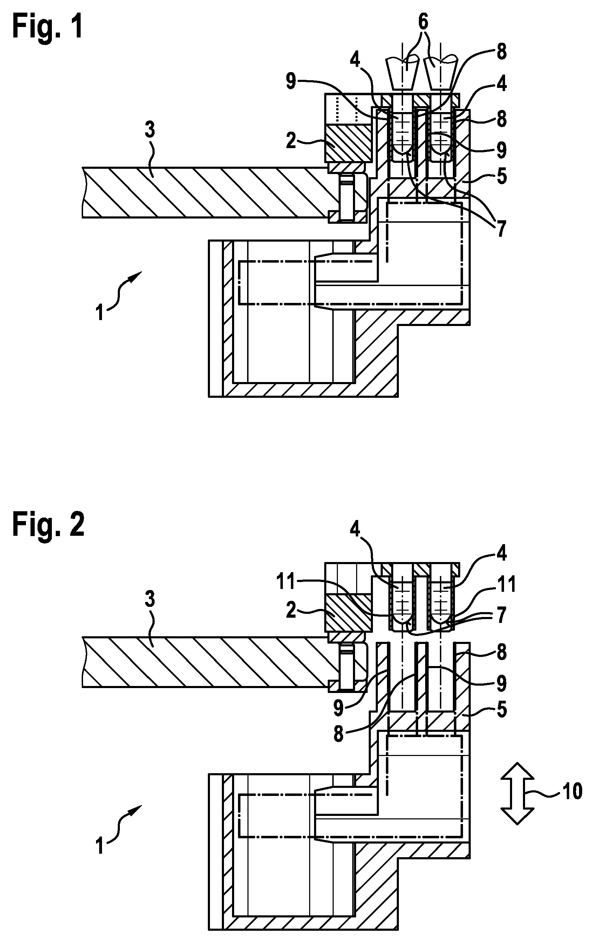

Nachfolgend wird anhand der Figuren 1 bis 3 ein erstes Ausführungsbeispiel einer Kapselwägevorrichtung 1 beschrieben.

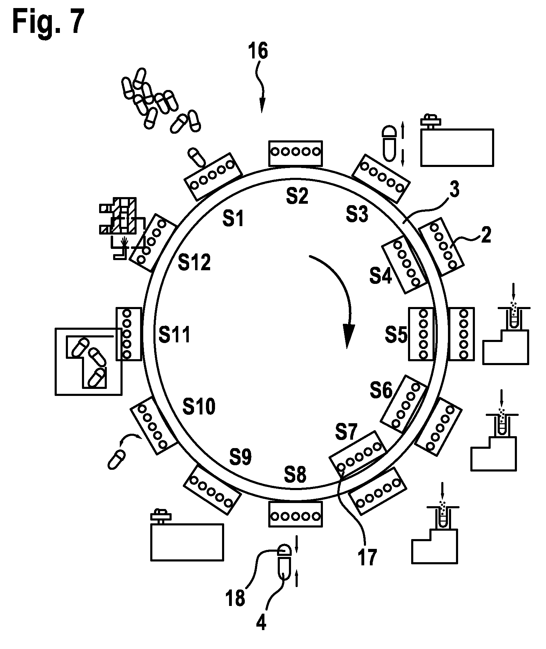

Die Kapselwägevorrichtung 1 umfasst einen Kapselhalter 2, der mittels einer Transportvorrichtung 3 an verschiedenste Stationen S1 bis S12 (siehe Figur 7) einer Kapselfüllmaschine 16 (siehe Figur 7) bewegt werden kann. Der Kapselhalter 2 weist mehrere Köcher 11 auf. In diese Köcher 11 sind Kapselunterteile 4 eingesetzt. Die Kapselunterteile 4 werden insbesondere mit medizinischen Präparaten befüllt und verschlossen.

Weiterer Bestandteil der Kapselwägevorrichtung 1 ist eine Wägeeinheit 5, die unabhängig vom Kapselhalter 2 bewegt und positioniert werden kann. Die Wägeeinheit 5 umfasst im gezeigten Beispiel eine erste Elektrode 8 und eine zweite Elektrode 9 pro Kapselunterteil 4 bzw. pro Köcher 11.

Figur 1 zeigt die Kapselwägevorrichtung 1 an einer Befüllvorrichtung 6 einer Füllstation S5 bis S7 (siehe Figur 7). In Figur 1 befindet sich die Wägeeinheit 5 in einer Position, in der ein Wiegen der Kapselunterteile 4 möglich ist. In Figur 2 befindet sich die Wägeeinheit 5 in einer Position vor oder nach dem Wiegen. In Figur 2 ist die entsprechende Zustellbewegung 10 eingezeichnet, die nötig ist, um die Elektroden 8, 9 direkt an die Köcher 11 bzw. die Kapselunterteile 4 heranzufahren.

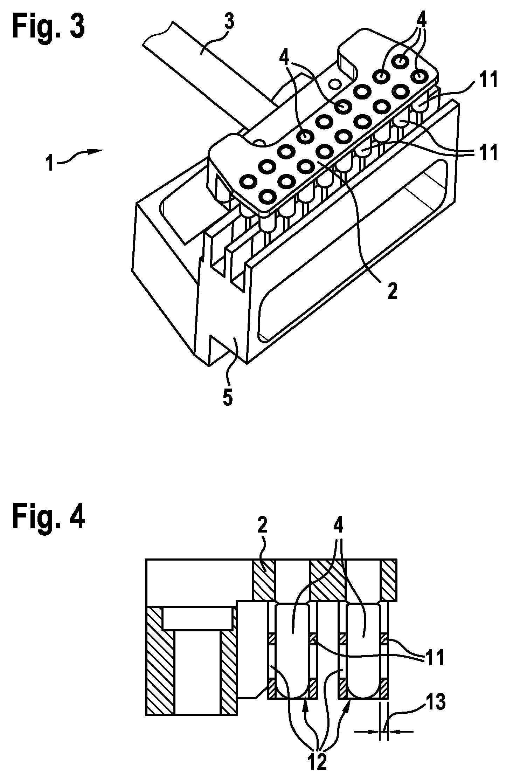

Die Kapselunterteile 4 weisen jeweils eine Außenwandung 7 auf. Mit dieser Außenwandung 7 sind die Kapselunterteile 4 form- und/oder kraftschlüssig im Kapselhalter 2, insbesondere in den Köchern 11, aufgenommen. Die Köcher 11 sind so ausgestaltet, dass die Außenwandung 7 teilweise freiliegt und/oder nur äußerst dünn vom Material der Köcher 11 umschlossen ist. Eine entsprechend dünne Materialstärke 13 der Köcher 11 zeigt Figur 4. Durch diese Ausbildung der Köcher 11 können die Elektroden 8, 9 äußerst nahe an die Kapselunterteile 4 herangefahren werden.

Figur 3 zeigt eine isometrische Ansicht der Kapselwägevorrichtung 1 gemäß dem ersten Ausführungsbeispiel. Zu sehen ist, dass in einem Kapselhalter 18 Köcher 11 vorgesehen sind. In jedem der Köcher 11 steckt ein Kapselunterteil 4. Mittels der Wägeeinheit 5 kann gleichzeitig jedes Kapselunterteil 4 separat gewogen werden.

Figur 4 zeigt im Detail ein zweites Ausführungsbeispiel der Kapselwägevorrichtung 1. Im zweiten Ausführungsbeispiel weisen die Köcher 11 sowohl am unteren Ende als auch an der Mantelfläche mehrere Durchbrüche 12 auf. Durch diese Durchbrüche 12 können mittels des elektrischen Feldes zwischen den beiden Elektroden 8, 9 die Kapselunterteile 4 noch besser vermessen werden.

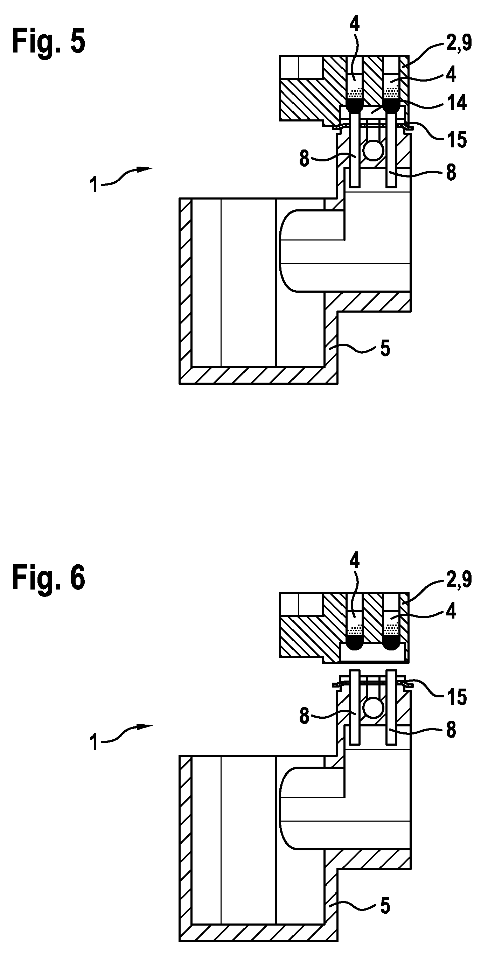

Figuren 5 und 6 zeigen ein drittes Ausführungsbeispiel der Kapselwägevorrichtung 1. In Figur 5 befindet sich die Wägeeinheit 5 in einer Position zum Vermessen der Kapselunterteile 4. In Figur 6 befindet sich die Wägeeinheit 5 in einer Position vor oder nach dem Wiegen.

Im dritten Ausführungsbeispiel ist die zweite Elektrode 9 im Kapselhalter 2 ausgebildet. Dementsprechend umfasst die Wägeeinheit 5 nur noch erste Elektroden 8. Pro Kapselunterteil 4 bzw. pro Köcher 11 ist eine erste Elektrode 8 in der Wägeeinheit 5 vorgesehen. Die unteren Enden der Kapselunterteile 4 liegen in den Köchern 11 bzw. im Kapselhalter 2 frei. Zum Wiegen fährt die Wägeeinheit 5 von unten heran, so dass jeweils eine erste Elektrode 8 an ein unteres Ende der Kapselunterteile 4 herangefahren wird. Die Wägeeinheit 5 umfasst eine Dichtlippe 15. Mittels dieser Dichtlippe 15 wird ein dichter Raum 14 zwischen Kapselhalter 2 und Wägeeinheit 5 geschlossen. In diesem dichten Raum 14 befindet sich die Kontaktstelle zwischen Kapselunterteilen 4 und ersten Elektroden 8. Mittels einer nicht dargestellten Vakuumpumpe kann Unterdruck im dichten Raum 14 erzeugt werden und somit die Messgenauigkeit erhöht werden.

Figur 7 zeigt eine Kapselfüllmaschine 16 gemäß einem vierten Ausführungsbeispiel, umfassend eine der vorab beschriebenen Kapselwägevorrichtungen 1. Gleiche bzw. funktional gleiche Bauteile sind in allen Ausführungsbeispielen mit denselben Bezugszeichen versehen.

Figur 7 zeigt, dass in der Kapselfüllmaschine 16 die Kapseln mittels der Transportvorrichtung 3 kreisförmig bewegt werden. In dem dargestellten Halter 17 werden die Kapseloberteile 18 mittransportiert, während die Kapselunterteile 4 befüllt werden.

Dabei werden Stationen S1 bis S12 durchlaufen: An Station S1 erfolgt ein Einsetzen der Kapseln in den Kapselhalter 2. An Stationen S2 und S3 erfolgt ein Wiegen der Kapseln (Tara) und ein Abnehmen eines Kapseloberteils 18 vom Kapselunterteil 4. An den Stationen S5 bis S7 erfolgt ein Füllen der Kapselunterteile 4. An Station S8 wird das Kapseloberteil 18 auf das Kapselunterteil 4 aufgesetzt. An Station S9 erfolgt ein Wiegen der vollständig gefüllten Kapseln. An Station S10 werden fehlerhafte Kapseln ausgeschieden. An Station S11 erfolgt der Auswurf aus dem Kapselhalter 2. An Station S12 erfolgt eine Reinigung des Kapselhalters 2.

In Figur 7 ist, aufgrund der einfachen Darstellung, das Wiegen der Kapseln durch eine symbolische Waage dargestellt. Tatsächlich wird jedoch in der Kapselfüllmaschine 16, an verschiedensten Stellen, beispielsweise an den einzelnen Stationen S1 bis S12 oder zwischen den Stationen, das Wiegen des Kapselunterteils 4 mit der erfindungsgemäßen Kapselwägevorrichtung 1 durchgeführt. Selbstverständlich kann bei diesem Wiegevorgang auch das Kapseloberteil 18 auf dem Kapselunterteil 4 aufgesetzt sein.

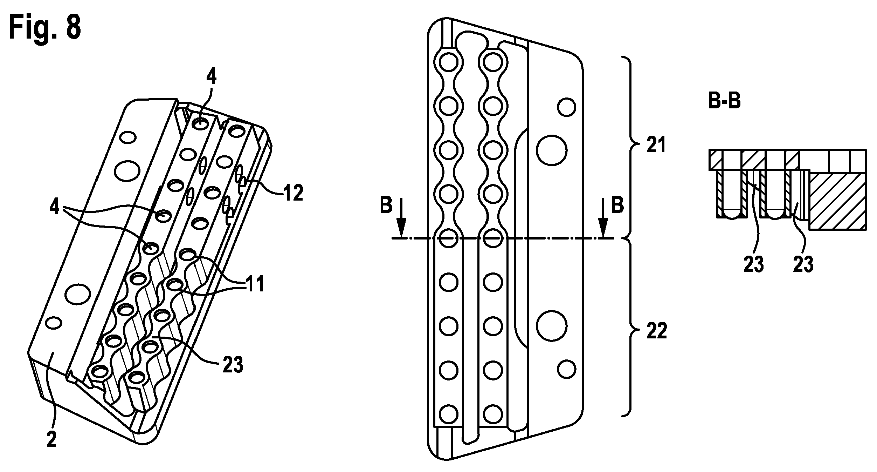

Figur 8 zeigt zwei Varianten zur Ausbildung des Kapselhalters 2. Auf der linken Seite zeigt Figur 8 eine isometrische Ansicht des Kapselhalters 2 von unten. Auf der rechten Seite ist eine Draufsicht und eine Schnittansicht gezeigt.

Die Darstellung in Figur 8 zeigt zwei unterschiedliche Varianten zur Ausbildung des Kapselhalter 2. Der Bereich 21 kennzeichnet eine erste Variante. Der Bereich 22 kennzeichnet eine zweite Variante. In beiden Varianten 21, 22 werden unterschiedliche Stege 23 zur Versteifung der Köcher 11 verwendet. Wie die beiden Varianten 21, 22 zeigen, können unterschiedliche Stege 23 sowohl quer als auch längs zwischen den Köchern 11 ausgebildet werden, um diese zu versteifen. Die Stege 23 werden dabei so angeordnet, dass stets eine der vorab beschriebenen Wägeeinheiten 5 mit den entsprechenden Elektroden 8, 9 möglichst nah an die Köcher 11 heranfahrbar ist.

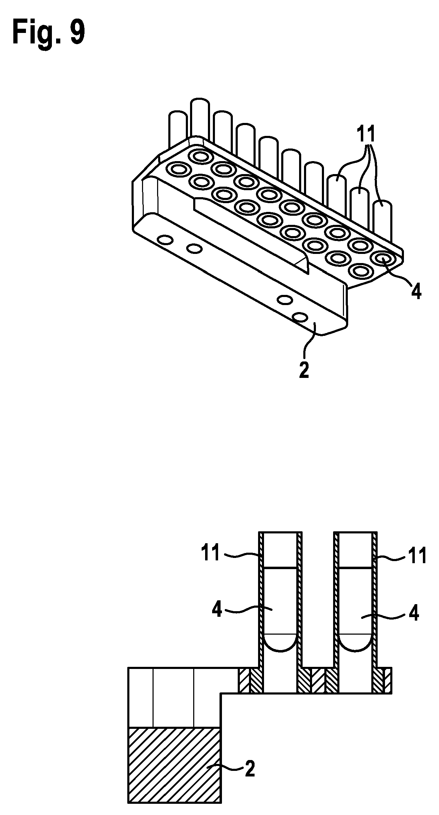

Figur 9 zeigt gemäß einem sechsten Ausführungsbeispiel die Ausbildung des Kapselhalters 2. Im oberen Bereich der Figur 9 ist eine isometrische Ansicht des Kapselhalters 2 gezeigt. Im unteren Bereich ist eine Schnittansicht gezeigt. Gemäß Figur 9 können sich die Köcher 11 am Kapselhalter 2 auch nach oben erstrecken. Dementsprechend wird die Wägeeinheit 5 von oben und/oder von der Seite an die Köcher 11 herangefahren.

Wie die unterschiedlichen Ausführungsbeispiele und Varianten zur Erfindung zeigen, ist ausschlaggebend, dass die Kapselunterteile in den Köchern 11 möglichst frei liegen, so dass die Elektroden 8, 9 der Wägeeinheit 5 möglichst nah herangebracht werden können.

## Patentansprüche

1. Kapselwägevorrichtung (1), umfassend
- einen Kapselhalter (2) zur Aufnahme zumindest eines *Kapselunterteils (4), vorzugsweise für medizinische Präparate,
- eine unabhängig vom Kapselhalter (2) positionierbare Wägeeinheit (5),
- eine Transportvorrichtung (3) zum Bewegen des Kapselhalters (2), unabhängig von der Wägeeinheit (5), an verschiedene Stationen (S1-S12),
**dadurch gekennzeichnet, dass** die Wägeeinheit (5) zumindest eine erste Elektrode (8) zum Wiegen des Kapselunterteils (4) im Kapselhalter (2) umfasst, und
- zumindest eine zweite Elektrode (9),
- wobei eine Außenwandung (7) des zumindest einen Kapselunterteils (4) im Kapselhalter (2) freiliegt oder vom Kapselhalter (2) nur dünn umschlossen ist, sodass mittels eines elektrischen Feldes zwischen der ersten und zweiten Elektrode (8, 9) das Kapselunterteil (4) wiegbar ist, ohne das Kapselunterteil (4) im Kapselhalter (2) zu bewegen.

2. Kapselwägevorrichtung nach Anspruch 1, **dadurch gekennzeichnet, dass** der Kapselhalter (2) für jedes aufzunehmende Kapselunterteil (4) einen eigenen dünnwandigen Köcher (11) umfasst.

3. Kapselwägevorrichtung nach Anspruch 2, **dadurch gekennzeichnet, dass** der Köcher (11) am unteren Ende und/oder an der Mantelfläche zumindest einen Durchbruch (12) aufweist.

4. Kapselwägevorrichtung nach einem der vorhergehenden Ansprüche,
**dadurch gekennzeichnet, dass** die Materialstärke (13) des Kapselhalters (2) zwischen Elektrode (8, 9) und Kapselunterteil (4) maximal 3 mm, vorzugsweise maximal 1,5 mm, besonders vorzugsweise maximal 0,5 mm, beträgt.

5. Kapselwägevorrichtung nach einem der vorhergehenden Ansprüche, **dadurch gekennzeichnet, dass** die Wägeeinheit (5) die zumindest eine zweite Elektrode umfasst.

6. Kapselwägevorrichtung nach einem der vorhergehenden Ansprüche, **dadurch gekennzeichnet, dass** die mit dem Kapselunterteil (4) in Berührung stehenden Anteile des Kapselhalters (2) elektrisch nicht leitend, vorzugsweise aus Kunststoff, ausgebildet sind.

7. Kapselwägevorrichtung nach einem der Ansprüche 1 bis 4, **dadurch gekennzeichnet**, der Kapselhalter (2) die zumindest eine zweite Elektrode (9) umfasst.

8. Kapselwägevorrichtung nach einem der vorhergehenden Ansprüche, **gekennzeichnet durch** einen dichten Raum (16), der **durch** Ansetzen der Wägeeinheit (5) an den Kapselhalter (2) entsteht, und eine Vakuumpumpe zum Erzeugen eines Unterdrucks im dichten Raum (14).

9. Kapselfüllmaschine (16), umfassend
- eine Kapselwägevorrichtung (5) nach einem der vorhergehenden Ansprüche,
- eine Einsetzstation (S1) zum Einsetzen zumindest eines Kapselunterteils (4) in den Kapselhalter (2),
- eine Füllstation (S5, S6, S7) zum Befüllen des Kapselunterteils (4), und
- eine Verschlussstation (S8) zum Aufsetzen eines Kapseloberteils (17) auf das Kapselunterteil (4),
- wobei an den Stationen (S1-S12) und/oder zwischen den Stationen (S1-S12) die Wägeeinheit (5) zum Wiegen an den Kapselhalter (2) heranfahrbar ist und/oder der Kapselhalter (2) an die Wägeeinheit (5) heranfahrbar ist, um ohne einer Bewegung des Kapselunterteils (4) im Kapselhalter (2) das Kapselunterteil (4) zu wiegen.

10. Verfahren zum Wiegen einer Kapsel umfassend die folgenden Schritte:
- Bereitstellen eines Kapselhalters (2) mit zumindest einem eingesetzten Kapselunterteil (4), wobei das Kapselunterteil (4) zum Befüllen, Transportieren und Verschließen in dem Kapselhalter (2) verbleibt,
- Heranfahren einer Wägeeinheit (5) mit zumindest einer ersten Elektrode (8) an den Kapselhalter (2) und/oder Heranfahren des Kapselhalters (2) an die Wägeeinheit (5) mit zumindest einer ersten Elektrode (8) zum Wiegen des zumindest einen Kapselunterteils (4) mit einem elektrischen Feld zwischen der ersten Elektrode (8) und einer zweiten Elektrode (8, 9), wobei das Kapselunterteil (4) zum Wiegen bewegungslos im Kapselhalter (2) verbleibt.

## Claims

1. Capsule-weighing device (1), comprising
- a capsule holder (2) for receiving at least one capsule lower part (4), preferably for medical preparations,
- a weighing unit (5) that can be positioned independently of the capsule holder (2),
- a transport device (3) for moving the capsule holder (2), independently of the weighing unit (5), to different stations (S1-S12),
has at least one first electrode (8) for weighing the capsule lower part (4) in the capsule holder (2) **characterised in that** the weighing unit (5), and
- at least one second electrode (9),
- wherein an outer wall (7) of the at least one capsule lower part (4) is exposed in the capsule holder (2), or is only thinly enclosed by the capsule holder (2), such that, by means of an electric field between the first and second electrodes (8, 9), the capsule lower part (4) can be weighed without moving the capsule lower part (4) in the capsule holder (2).

2. Capsule-weighing device according to Claim 1, **characterized in that** the capsule holder (2) comprises, for each capsule lower part (4) to be received, a dedicated thin-walled pot (11).

3. Capsule-weighing device according to Claim 2, **characterized in that** the pot (11) has, at the lower end and/or on the circumferential surface, at least one aperture (12).

4. Capsule-weighing device according to one of the preceding claims, **characterized in that** the material thickness (13) of the capsule holder (2) between electrode (8, 9) and capsule lower part (4) is at most 3 mm, preferably at most 1.5 mm, particularly preferably at most 0.5 mm.

5. Capsule-weighing device according to one of the preceding claims, **characterized in that** the weighing unit (5) comprises the at least one second electrode.

6. Capsule-weighing device according to one of the preceding claims, **characterized in that** the portions of the capsule holder (2) that touch the capsule lower part (4) are electrically non-conductive, preferably made of plastic.

7. Capsule-weighing device according to one of Claims 1 to 4, **characterized in that** the capsule holder (2) comprises the at least one second electrode (9).

8. Capsule-weighing device according to one of the preceding claims, **characterized by** a sealed space (16) which arises when the weighing unit (5) is placed onto the capsule holder (2), and a vacuum pump for generating an underpressure in the sealed space (14).

9. Capsule-filling machine (16) comprising
- a capsule-weighing device (5) according to one of the preceding claims,
- an insert station (S1) for inserting at least one capsule lower part (4) into the capsule holder (2),
- a filling station (S5, S6, S7) for filling the capsule lower part (4), and
- a closing station (S8) for placing a capsule upper part (17) onto the capsule lower part (4),
- wherein, at the stations (S1-S12) and/or between the stations (S1-S12), the weighing unit (5) can be driven to the capsule holder (2) and/or the capsule holder (2) can be driven to the weighing unit (5), in order to weigh the capsule lower part (4) without a movement of the capsule lower part (4) in the capsule holder (2).

10. Method for weighing a capsule, comprising the following steps:
- making available a capsule holder (2) with at least one inserted capsule lower part (4), wherein the capsule lower part (4) remains in the capsule holder (2) for filling, transporting and closing,
- driving a weighing unit (5) that has at least one first electrode (8) to the capsule holder (2) and/or driving the capsule holder (2) to the weighing unit (5) that has at least one first electrode (8) for weighing the at least one capsule lower part (4) with an electric field between the first electrode (8) and a second electrode (8, 9), wherein the capsule lower part (4) for weighing remains motionless in the capsule holder (2).

## Revendications

1. Dispositif de pesée de capsules (1), comprenant
- un support de capsule (2) pour recevoir au moins une partie inférieure de capsule (4), de préférence pour des préparations médicales,
- une unité de pesée (5) pouvant être positionnée indépendamment du support de capsule (2),
- un dispositif de transport (3) pour déplacer le support de capsule (2), indépendamment de l'unité de pesée (5), vers différents postes (S1-S12),
**caractérisé en ce que** l'unité de pesée (5) comprend au moins une première électrode (8) pour peser la partie inférieure de capsule (4) dans le support de capsule (2), et
- au moins une deuxième électrode (9),
- une paroi extérieure (7) de l'au moins une partie inférieure de capsule (4) étant exposée dans le support de capsule (2) ou étant entourée seulement finement par le support de capsule (2), de telle sorte que la partie inférieure de capsule (4) puisse être pesée au moyen d'un champ électrique entre la première et la deuxième électrode (8, 9) sans déplacer la partie inférieure de capsule (4) dans le support de capsule (2).

2. Dispositif de pesée de capsules selon la revendication 1, **caractérisé en ce que** le support de capsule (2) comprend pour chaque partie inférieure de capsule à recevoir (4) un logement propre à parois minces (11).

3. Dispositif de pesée de capsules selon la revendication 2, **caractérisé en ce que** le logement (11) présente au moins un orifice (12) à l'extrémité inférieure et/ou au niveau de la surface d'enveloppe.

4. Dispositif de pesée de capsules selon l'une quelconque des revendications précédentes, **caractérisé en ce que** l'épaisseur de matériau (13) du support de capsule (2) entre l'électrode (8, 9) et la partie inférieure de capsule (4) vaut au maximum 3 mm, de préférence au maximum 1,5 mm, particulièrement préférablement au maximum 0,5 mm.

5. Dispositif de pesée de capsules selon l'une quelconque des revendications précédentes, **caractérisé en ce que** l'unité de pesée (5) comprend l'au moins une deuxième électrode.

6. Dispositif de pesée de capsules selon l'une quelconque des revendications précédentes, **caractérisé en ce que** les parties du support de capsule (2) en contact avec la partie inférieure de capsule (4) sont réalisées de manière non conductrice de l'électricité, de préférence en plastique.

7. Dispositif de pesée de capsules selon l'une quelconque des revendications 1 à 4, **caractérisé en ce que** le support de capsule (2) comprend l'au moins une deuxième électrode (9).

8. Dispositif de pesée de capsules selon l'une quelconque des revendications précédentes, **caractérisé par**
un espace hermétique (16) qui est formé par l'application de l'unité de pesée (5) contre le support de capsule (2),
et par une pompe à vide pour générer une dépression dans l'espace hermétique (14).

9. Machine de remplissage de capsules (16), comprenant
- un dispositif de pesée de capsules (5) selon l'une quelconque des revendications précédentes,
- un poste d'insertion (S1) pour insérer au moins une partie inférieure de capsule (4) dans le support de capsule (2),
- un poste de remplissage (S5, S6, S7) pour remplir la partie inférieure de capsule (4), et
- un poste de fermeture (S8) pour poser une partie supérieure de capsule (17) sur la partie inférieure de capsule (4),
- l'unité de pesée (5), pour effectuer la pesée, pouvant être approchée du support de capsule (2) au niveau des postes (S1-S12) et/ou entre les postes (S1-S12) et/ou le support de capsule (2) pouvant être approché de l'unité de pesée (5) afin de peser la partie inférieure de capsule (4) sans déplacer la partie inférieure de capsule (4) dans le support de capsule (2).

10. Procédé pour peser une capsule, comprenant les étapes suivantes :
- fourniture d'un support de capsule (2) avec au moins une partie inférieure de capsule (4) insérée, la partie inférieure de capsule (4) restant dans le support de capsule (2) pour le remplissage, le transport et la fermeture,
- rapprochement d'une unité de pesée (5) ayant au moins une première électrode (8), du support de capsule (2) et/ou rapprochement du support de capsule (2) de l'unité de pesée (5) comprenant au moins une première électrode (8) en vue de la pesée de l'au moins une partie inférieure de capsule (4) avec un champ électrique entre la première électrode (8) et une deuxième électrode (8, 9), la partie inférieure de capsule (4) restant immobile dans le support de capsule (2) en vue de la pesée.
